# EUROPÄISCHE PATENTSCHRIFT

(11) **EP 1 338 464 B1**
(45) Veröffentlichungstag und Bekanntmachung des Hinweises auf die Patenterteilung: **10.11.2004**
(21) Anmeldenummer: 03001833.7
(22) Anmeldetag: 29.01.2003
(51) Int. Cl.: B60N 2/56

(54) **Kraftfahrzeugsitz**
Vehicle seat
Siège de véhicule

(30) Priorität: 22.02.2002 DE 10207489
(43) Veröffentlichungstag der Anmeldung: 27.08.2003
(73) Patentinhaber: DaimlerChrysler AG, 70567 Stuttgart (DE)
(72) Erfinder: Minuth, Karl-Heinz, 71120 Grafenau (DE); Pfahler, Karl, Dr., 70180 Stuttgart (DE)

(56) Entgegenhaltungen:
- EP-A- 1 266 794
- DE-A- 10 001 314
- DE-A- 19 920 062
- US-A- 5 102 189
- US-A- 6 062 641
- US-A- 6 145 925

## Beschreibung

Die Erfindung betrifft einen Kraftfahrzeugsitz nach dem Oberbegriff des Patentanspruchs 1.

Aus der US-A-6 145 925 ist ein solcher Sitz mit einer Rückenlehne als bekannt zu entnehmen, deren Polsterung eine mittels eines Gebläses einer Ventilationseinrichtung luftdurchflutbare Ventilationsschicht umfasst. Die Rückenlehne weist auf ihrer Rückseite ein Verkleidungsteil auf, an dessen unteren Ende Lufteinlassöffnung für die Ventilationseinrichtung ausgespart ist.

Der Erfindung liegt die Aufgabe zugrunde, einen Sitz der eingangs genannten Art mit einem verbesserten Wirkungsgrad der Ventilationseinrichtung zu schaffen.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftfahrzeugsitz nach der Erfindung ist die Lufteinlassöffnung im oberen Bereich des Verkleidungsteils der Rückenlehne angeordnet. Ein aus der Klimaanlage im Bereich der Instrumententafel austretender trockener Luftstrom, welcher erfahrungsgemäß unterhalb des Daches in Richtung nach hinten strömt und hinter den Fahrzeugsitzen abfällt, kann hierdurch auf kürzestem Wege - und ohne bereits übermäßig an Feuchtigkeit aus dem Innenraum aufgenommen zu haben - zu der Lufteinlassöffnung gelangen. Der kürzeste Weg zum Gebläse der Ventilationseinrichtung wird zudem erreicht, indem das Gebläse im Überdeckungsbereich mit der zugeordneten Lufteinlassöffnung angeordnet und die trockene Luft auf direktem Weg aufnehmen kann.

Vorzugsweise ist die Lufteinlassöffnung im Übergangsbereich zwischen Außenbereichen und einem Mittelbereich des Verkleidungsteiles angeordnet, wodurch eine bestmögliche Kaschierung der Einlassöffnungen realisiert werden kann.

Weitere Vorteile, Merkmale und Einzelheiten der Erfindung ergeben sich aus der nachfolgenden Beschreibung eines bevorzugten Ausführungsbeispieles sowie anhand der Zeichnungen; diese zeigen in
- Fig. 1: eine schematische Schnittansicht durch einen im Innenraum eines Kraftwagens angeordneten Sitzes entlang einer vertikalen, in Fahrzeuglängsrichtung verlaufenden Schnittebene; und in
- Fig.2: eine schematischen Schnitt durch die Rückenlehne des Sitzes entlang der Linie II-II in Fig.1.

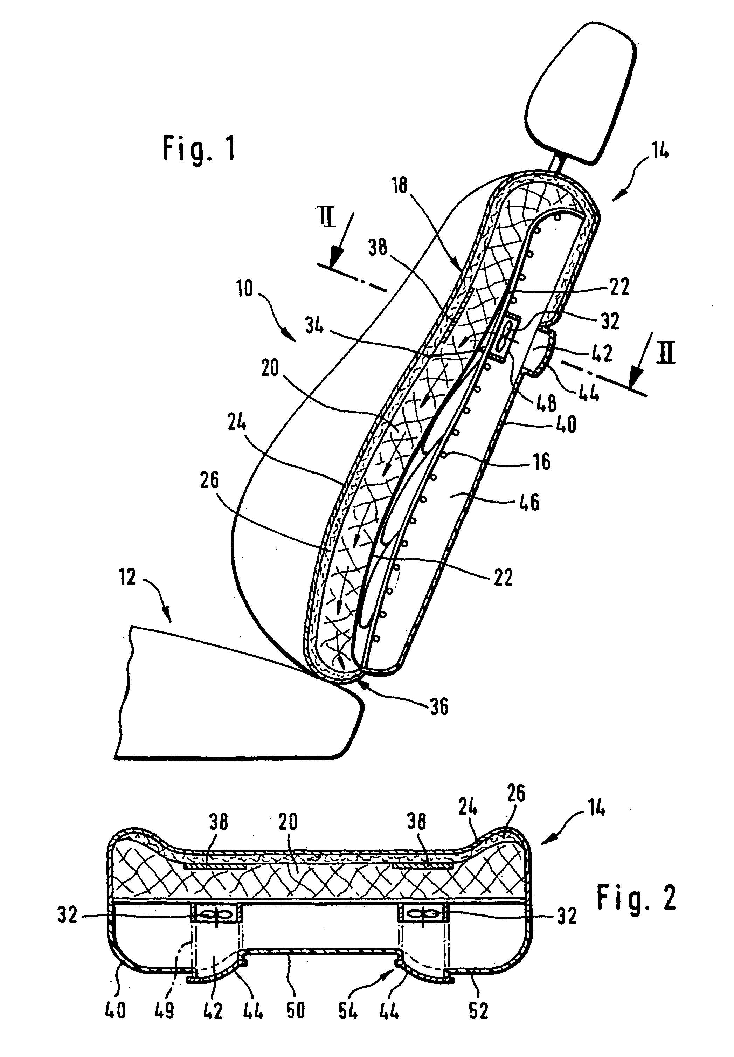

In Fig.1 ist in schematischer Schnittansicht entlang einer vertikalen, in Fahrzeuglängsrichtung verlaufenden Schnittebene ein im Innenraum eines Kraftwagens angeordneter Sitz 10 mit einem Sitzteil 12 und einer Rückenlehne 14 dargestellt. Die Rückenlehne 14 umfasst einen Polsterträger 16, der an einem nicht dargestellten Lehnenrahmen befestigt ist und ein Polster 18 trägt. In dem hier gezeigten Ausführungsbeispiel ist der Polsterträger als Drahtgeflecht ausgebildet, jedoch wäre beispielsweise auch eine Kunststoffschale denkbar. Das Polster 18 umfasst eine luftdurchflutbare Ventilationsschicht 20 aus grob strukturiertem Vliesmaterial, z.B. Gummihaar, oder Abstandsgewirke, und eine luftundurchlässige Polsterschicht 22, welche auf dem Polsterträger 16 druckverteilend aufliegt und die Ventilationsschicht 20 auf deren Rückseite vollständig überdeckt. Zwischen dem Polsterträger 16 und der Polsterschicht 22 sind im Spiegelbereich der Rückenlehne Multikonturblasen 30 angeordnet, die mittels Luft in ihrer Dicke variiert werden können. Die von der Polsterschicht 22 abgekehrte Vorderseite des Polsters 18 ist mit einem luftdurchlässigen Polsterbezug 24 aus Textilstoff oder perforiertem Leder bzw. Kunststoff bezogen, wobei zwischen Ventilationsschicht 20 und Polsterbezug 24 eine Unterschicht 26 aus Polsterwatte, Wollvlies oder einem offenporigen und ggf. perforierten Schaumstoff oder dgl. angeordnet ist. In dem hier gezeigten Ausführungsbeispiel sind innerhalb der Unterschicht 26 auch Heizdrähte einer elektrischen Sitzheizung angeordnet.

Die Ventilationsschicht 20 ist mittels wenigstens eines elektrisch betriebenen Gebläses 32 mit Luft zu versorgen. Hierzu weist die Ventilationsschicht 20 eine Einströmöffnung 34 für den aus dem Gebläse 32 eintretenden Luftstrom sowie eine Ausströmöffnung 36 für den ausströmenden Luftstrom am unteren Ende der Rückenlehne 14 auf. Im Bereich der Einströmöffnung 34 ist die Ventilationsschicht 20 auf ihrer von der Polsterschicht 22 abgewandten Seite mit einer Dämmschicht 38 z.B. aus Kunststofffolie bedeckt, so dass die vom Gebläse 32 über die Einströmöffnung 34 in die Ventilationsschicht 20 gelangende Luft nicht auf hier waagerechtem Weg durch die die Ventilationsschicht 20 strömt und durch den Bezug 24 austritt. Vielmehr wird der über die Einströmöffnung 34 in die Ventilationsschicht 20 gelangende Luftstrom an der Dämmschicht 38 in Richtung nach unten umgelenkt, um die Ventilationsschicht 20 zu durchströmen. Auf ihrer Rückseite ist die Rückenlehne 14 mit einem Verkleidungsteil 40 versehen, welches hier aus Kunststoff besteht und an dem nicht gezeigten Lehnenrahmen befestigt ist. Aus dem Verkleidungsteil 40 ist eine Lufteinlassöffnung 42 für das Gebläse 32 der Ventilationseinrichtung ausgespart, wobei die Lufteinlassöffnung 42 im Überdeckungsbereich mit dem zugeordneten Gebläse 32 liegt, um einen direkten Weg zwischen eintretender Luft und Gebläse 32 zu schaffen. Die Lufteinlassöffnung 42 ist durch eine am Verkleidungsteil 40 angeordnete Abdeckung 44 kaschiert, welche hier beispielsweise als Gitter oder mit Öffnungen versehender Deckel ausgebildet ist. Das Verkleidungsteil 40 der Rückenlehne 14 ist im Abstand hinter dem Polsterträger 16 angeordnet, wobei das Gebläse 32 zumindest teilweise innerhalb des Zwischenraums 46 zwischen Verkleidungsteil 40 und Polsterträger 16 angeordnet ist. In dem hier gezeigten Ausführungsbeispiel ist der Lufteinlass 48 des Gebläses 32 in einem Abstand zu der Lufteinlassöffnung 42 in dem Verkleidungsteil 40 angeordnet. Gleichfalls ist es jedoch denkbar, dass zwischen dem Lufteinlass 48 des Gebläses 32 und der Lufteinlassöffnung 42 in dem Verkleidungsteil 40 ein in Fig.2 gestrichelt angedeuteter Luftkanal 49 vorgesehen ist.

Fig. 2 zeigt einen schematischen Schnitt durch die Rückenlehne 14 entlang der Linie II-II in Fig.1, wobei das Verkleidungsteil 40 im Mittelbereich 50 eine Knievertiefung umfasst, der seitlich von Außenbereichen 52 begrenzt ist. In dem hier gezeigten Ausführungsbeispiel sind im oberen Bereich der Rückenlehne 14 zwei Gebläse 32 zur Versorgung der Ventilationsschicht 20 mit Luft vorgesehen. Die Lufteinlassöffnungen 42 der beiden Gebläse 32 sind jeweils im zugeordneten Übergangsbereich 54 zwischen dem Mittelbereich 50 und den Außenbereichen 52 ausgespart und durch die Abdeckungen 44 verkleidet.

## Patentansprüche

1. Kraftfahrzeugsitz mit einer Rückenlehne (14), deren Polsterung (18) eine mittels eines Gebläses (32) einer Ventilationseinrichtung luftdurchflutbare Ventilationsschicht (20) umfasst, wobei die Rückenlehne (14) auf ihrer Rückseite mit einem Verkleidungsteil (40) versehen ist, aus welchem wenigstens eine Lufteinlassöffnung (42) für das Gebläse (32) der Ventilationseinrichtung ausgespart ist,
**dadurch gekennzeichnet,**
**dass** die Lufteinlassöffnung (42) im oberen Bereich des Verkleidungsteils (40) der Rückenlehne (14) und im Überdeckungsbereich mit dem zugeordneten Gebläse (32) der Ventilationseinrichtung angeordnet ist,
und **dass** die Lufteinlassöffnung (42) durch eine am Verkleidungsteil (40) vorgesehene Abdeckung (44) kaschiert ist.

2. Kraftfahrzeugsitz nach Anspruch 1,
**dadurch gekennzeichnet,**
**dass** das Verkleidungsteil (40) der Rückenlehne (14) in einem Abstand hinter einem Polsterträger (16) angeordnet ist, wobei das Gebläse (32) zumindest teilweise innerhalb des Zwischenraums (46) angeordnet ist.

3. Kraftfahrzeugsitz nach Anspruch 2,
**dadurch gekennzeichnet,**
**dass** der Lufteinlass (48) des Gebläses (32) in einem Abstand zu der Lufteinlassöffnung (42) in dem Verkleidungsteil (40) angeordnet ist.

4. Kraftfahrzeugsitz nach Anspruch 3,
**dadurch gekennzeichnet,**
**dass** zwischen dem Lufteinlass (48) des Gebläses (32) und der Lufteinlassöffnung (42) im Verkleidungsteil (40) ein Luftkanal (49) vorgesehen ist.

5. Kraftfahrzeugsitz nach Anspruch 1,
**dadurch gekennzeichnet,**
**dass** das Verkleidungsteil (40) im Mittelbereich (50) eine Knievertiefung umfasst, wobei die Lufteinlassöffnung (42) im Übergangsbereich (54) zwischen dem Mittelbereich (50) und diesen seitlich begrenzenden Außenbereichen (52) angeordnet ist.

## Claims

1. Vehicle seat with a back rest (14), the cushion (18) of which has a ventilation layer (20) through which air is circulated by means of a fan (32) of a ventilation system, the back rest (14) being provided with a cladding part (40) on its rear face, from which at least one air inlet orifice (42) is cut for the fan (32) of the ventilation system,
**characterised in that**
the air inlet orifice (42) is disposed in the upper region of the cladding part (40) of the back rest (14) and in the region overlapping with the co-operating fan (32) of the ventilation system, and the air inlet orifice (42) is faced with a cover (44) provided on the cladding part (40).

2. Vehicle seat as claimed in claim 1,
**characterised in that**
the cladding part (40) of the back rest (14) is arranged at a distance behind an upholstery support (16) and the fan (32) is disposed at least partially in the intermediate space (46).

3. Vehicle seat as claimed in claim 2,
**characterised in that**
the air inlet (48) of the fan (32) is disposed in the cladding part (40) at a distance from the air inlet orifice (42).

4. Vehicle seat as claimed in claim 3,
**characterised in that**
an air duct (49) is provided in the cladding part (40) between the air inlet (48) of the fan (32) and the air inlet orifice (42).

5. Vehicle seat as claimed in claim 1,
**characterised in that**
the cladding part (40) has a knee recess in the middle region (50) and the air inlet orifice (42) is disposed in the transition region (54) between the middle region (50) and outer regions (52) bounding it at the sides.

## Revendications

1. Siège de véhicule présentant un dossier (14), dont le rembourrage (18) présente une couche aérée (20) perméable à l'air au moyen d'un ventilateur (32) d'un dispositif de ventilation, moyennant quoi le dossier (14) est pourvu, au dos, d'une partie de revêtement (40), sur laquelle au moins une ouverture d'entrée d'air (42) destinée au ventilateur (32) du dispositif de ventilation est formée, **caractérisé en ce que** l'ouverture d'entrée d'air (42) est située dans la zone supérieure de la partie de revêtement (40) du dossier (14) et dans la zone de recouvrement avec le ventilateur associé (32) du dispositif de ventilation, et **en ce que** l'ouverture d'entrée d'air (42) est doublée au moyen d'une couverture (44) prévue sur la partie de revêtement (40).

2. Siège de véhicule selon la revendication 1, **caractérisé en ce que** la partie de revêtement (40) du dossier (14) est située dans un espacement derrière un support de rembourrage (16), moyennant quoi le ventilateur (32) est situé au moins en partie dans l'espace intermédiaire (46).

3. Siège de véhicule selon la revendication 2, **caractérisé en ce que** l'entrée d'air (48) du ventilateur (32) est située à une distance de l'ouverture d'entrée d'air (42) dans la partie de revêtement (40).

4. Siège de véhicule selon la revendication 3, **caractérisé en ce qu'**un conduit d'air (49) est prévu entre l'entrée d'air (48) du ventilateur (32) et l'ouverture d'entrée d'air (42) dans la partie de revêtement (40).

5. Siège de véhicule selon la revendication 1, **caractérisé en ce que** la partie de revêtement (40) présente dans la zone du milieu (50) un évidement coudé, moyennant quoi l'ouverture d'entrée d'air (42) est située dans la zone de transition (54) entre la zone du milieu (50) et ces zones extérieures (52) délimitant les côtés.
